(19) Europäisches Patentamt
European Patent Office
Office européen des brevets

(11) **EP 4 760 335 A1**

(12) **DEMANDE DE BREVET EUROPEEN**

(43) Date de publication:
**17.06.2026 Bulletin 2026/25**

(21) Numéro de dépôt: **25222088.4**

(22) Date de dépôt: **10.12.2025**

(51) Classification Internationale des Brevets (IPC):
*G01S 7/292* (2006.01)       *G01S 7/41* (2006.01)
*G01S 13/52* (2006.01)       *G01S 13/524* (2006.01)

(52) Classification Coopérative des Brevets (CPC):
**G01S 13/5244; G01S 7/292; G01S 7/414;**
**G01S 13/52; G01S 13/5246**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **10.12.2024 FR 2413761**

(71) Demandeur: **THALES**
**92190 Meudon (FR)**

(72) Inventeurs:
• **GOY, Philippe**
**33700 MERIGNAC (FR)**
• **COTTRON, Rodolphe**
**33700 MERIGNAC (FR)**
• **KEMKEMIAN, Stéphane**
**33700 MERIGNAC (FR)**

(74) Mandataire: **Lavoix**
**2, place d'Estienne d'Orves**
**75441 Paris Cedex 09 (FR)**

(54) **PROCÉDÉ DE FONCTIONNEMENT D'UN RADAR DE DÉTECTION SUIVANT DEUX SOUS-MODES DOPPLER ET RADAR DE DÉTECTION ASSOCIÉ**

(57) La présente invention concerne un procédé de fonctionnement d'un radar comprenant une étape (110) d'émission/réception de signaux comprenant les sous-étapes suivantes :
+ génération (111) de deux impulsions consécutives associées à un premier et à un deuxième sous-mode Doppler ;
+ émission (112) des impulsions dans des bandes fréquentielles différentes ;
+ réception (113) dans une fenêtre temporelle commune des échos des impulsions ;
+ prétraitement (114) des échos reçus en relation avec le premier sous-mode Doppler pour déterminer une zone de fouillis ;
+ prétraitement (115) des échos reçus en relation avec le deuxième sous-mode Doppler en dehors de la zone de fouillis ;
le procédé comprenant en outre l'étape suivante :
- mise en œuvre (120) d'un traitement d'extraction à partir d'un résultat de prétraitement des échos reçus en relation avec le deuxième sous-mode Doppler.

FIG.2

**Description**

La présente invention concerne un procédé de fonctionnement d'un radar de détection suivant au moins deux sous-modes Doppler.

La présente invention concerne également un radar de détection mettant en œuvre un tel procédé.

Le domaine technique de l'invention est celui des systèmes radar embarqués par exemple à bord des aéronefs, des bateaux, des sous-marins ou des satellites, mettant en œuvre une détection/identification de cibles.

La problématique générale résolue par l'invention est la gestion de la présence de fouillis de sol et de mer qui vient perturber le fonctionnement des détecteurs classiquement utilisés en radar, fondés sur une analyse des cartes de puissance.

De manière connue en soi, les modes radar de détection de cibles aériennes et de cibles mobiles terrestres emploient des formes d'onde Doppler. La cohérence de phase entre impulsions permet d'exploiter l'effet Doppler lié au déplacement relatif des cibles vis-à-vis du radar. Cette technique classique permet de séparer les cibles en fonction de leur vitesse radiale. Elle a augmenté considérablement le pouvoir discriminateur des radars vis-à-vis de fouillis fixe (issu généralement du sol) ou faiblement mobile (issu généralement de la mer).

Le traitement Doppler est un traitement cohérent (exploitant l'information de phase) permettant d'augmenter le gain cohérent vis-à-vis d'un bruit blanc gaussien et pour une cible donnée son rapport signal-à-bruit (RSB).

Le traitement Doppler permet de découper sur l'axe fréquentiel les échos étalés tels que le fouillis de sol et de mer. La cellule de résolution du traitement Doppler, appelée également une case, est inversement proportionnelle au temps d'intégration. La surface radar équivalente (appelée également SER de l'anglais « Surface Equivalente Radar ») moyenne d'un fouillis surfacique sur une cellule distance-vitesse est alors proportionnelle à la cellule de résolution Doppler.

En règle générale, les fréquences de répétition *Fr* sont choisies en fonction des gammes de vitesse à traiter par le mode de par le fait que la vitesse ambiguë est fonction de la longueur d'onde A et de la *Fr* :

$$V_{amb} = \lambda \ Fr \ / \ 2.$$

La détection de cibles est alors réalisée sur des cartes en puissance en deux dimensions (distance, vitesse). Un contraste entre la cellule sous test et le bruit ambiant est réalisé puis un seuillage est effectué pour décider si une détection est présente sur la case sous test.

Pour lutter contre les zones de fouillis, dans le cadre de la détection de cibles aériennes et terrestres, une solution peut être de désactiver la fonction de détection sur l'ensemble du domaine vitesse (ou fréquence Doppler) du fouillis de terre, c'est-à-dire dans le domaine vitesse (ou fréquence Doppler) où le fouillis de terre se situe. On évite ainsi la détection des échos principaux. Cette technique est communément appelée « entaille Doppler » : on impose une vitesse minimale de détection en s'assurant que cette vitesse est supérieure à la trace du fouillis de terre (voire de mer).

Un inconvénient de cette solution est qu'elle n'autorise aucune détection sur le domaine vitesse correspondant au fouillis de sol, en provoquant une entaille dans l'axe des vitesses détectées. Elle ne permet pas non plus de gérer les zones de fouillis secondaires. La principale raison est que la largeur d'entaille n'est pas adaptative.

Pour éliminer les échos de fouillis secondaire, un traitement d'antenne peut être réalisé, par exemple en employant une voie ancillaire ou d'écartométrie afin de supprimer toute détection provenant des lobes secondaires. Cette technique consiste donc à tracter toutes les détections primaires au niveau carte de puissance puis de filtrer *a posteriori* via le traitement d'antenne. Cette technique présente deux contraintes : l'emploi de plusieurs voies de réception d'une part et d'autre part les zones proches du fouillis restent désensibilisées en fonction de la topologie du détecteur choisi.

Une autre solution connue consiste en une technique de projection *a priori* des zones de fouillis sur les cartes de puissance à partir des informations porteur et d'un modèle de faisceau antenne. Les zones ainsi définies sur les cartes de puissance sont filtrées au niveau du détecteur pour éviter toute détection dans ces zones. Cette technique est une version évoluée et adaptative de l'entaille Doppler et s'adapte en particulier aux zones de fouillis secondaires.

Une technique similaire peut être employée pour projeter les zones de fouillis dans le domaine non-ambigu (distance, vitesse). Toute détection après extraction tombant dans ces zones peut être éliminée (ou conditionnellement à une SER de suppression).

Un traitement d'images sur les cartes de puissance (Da, Va) peut également être employé pour reconnaître les zones de fouillis. Ces traitements bien qu'efficaces ont deux inconvénients : ils peuvent être lourds en termes de charge calculatoire et ils peuvent intégrer des cibles proches du fouillis (principal ou secondaire) dans les zones de fouillis à supprimer.

Les solutions connues ne sont donc pas suffisamment efficaces en termes de détection de zones de fouillis ou requièrent une charge calculatoire importante. De plus, les techniques précitées, sans connaissance a priori de la vitesse du fouillis de mer, ne permettent pas de gérer efficacement l'entaille Doppler (adaptative ou non) en présence de fouillis de mer.

La présente invention a pour but de résoudre ce problème de l'état de la technique et de proposer des moyens permettant de déterminer de manière efficace des zones de fouillis, sans charge calculatoire excessive.

En particulier, l'invention permet de reconnaitre les zones de fouillis, en amont des techniques de détections, afin d'aider ces dernières à résoudre la détection de cibles sur des cartes de puissance filtrées du fouillis principal et du fouillis secondaire.

De plus, un des avantages de l'invention est qu'elle fonctionne quelle que soit la configuration et le type de fouillis surfacique (vitesse de mer, mixité entre fouillis de terre et de mer, etc).

À cet effet, l'invention a pour objet un procédé de fonctionnement d'un radar de détection un procédé de fonctionnement d'un radar de détection de cibles suivant un mode Doppler, le procédé comprenant la mise en œuvre de plusieurs récurrences d'une étape d'émission/-réception de signaux, chaque n-ième récurrence de ladite étape comprenant les sous-étapes suivantes :

+ génération de deux impulsions consécutives associées à un premier sous-mode Doppler et à un deuxième sous-mode Doppler, lesdits sous-modes Doppler définissant des bilans énergétiques différents ;

+ émission des impulsions dans des bandes fréquentielles différentes selon des directions d'émission différentes ;

+ réception dans une fenêtre temporelle commune des échos des impulsions ;

+ prétraitement des échos reçus en relation avec le premier sous-mode Doppler pour déterminer au moins une zone de fouillis ;

+ prétraitement des échos reçus en relation avec le deuxième sous-mode Doppler en dehors de la ou de chaque zone de fouillis déterminée en relation avec le premier sous-mode Doppler ;

le procédé comprenant en outre l'étape suivante :

- mise en œuvre d'un traitement d'extraction à partir d'un résultat de prétraitement des échos reçus en relation avec le deuxième sous-mode Doppler.

Suivant d'autres aspects avantageux de l'invention, le procédé comprend une ou plusieurs des caractéristiques suivantes, prises isolément ou suivant toutes les combinaisons techniquement possibles :

- le deuxième sous-mode Doppler définit un bilan énergétique plus important que le premier sous-mode Doppler ;
- l'impulsion associée au deuxième sous-mode Doppler a une largeur plus importante que l'impulsion associée au premier sous-mode Doppler ;
- le radar de détection est embarqué dans un aéronef ;
- la direction d'émission de l'impulsion associée au premier sous-mode Doppler correspond à la direction sol/mer ;
- l'étape de prétraitement des échos reçus en relation avec le premier sous-mode Doppler comprend la détermination d'au moins une zone de fouillis principal et/ou d'au moins une zone de fouillis secondaire ;
- chacune des sous-étapes de prétraitement des échos reçus comprend la détermination d'une carte de puissance des échos, définissant un axe de distance et un axe de vitesse ;
- la ou chaque zone de fouillis est déterminée par un seuillage de la carte de puissance déterminée en relation avec le premier sous-mode Doppler ;
- la ou chaque zone de fouillis déterminée en relation avec le premier sous-mode Doppler est transférée sous la forme d'un masque sur la carte de puissance déterminée en relation avec le deuxième sous-mode Doppler ;
- le masque est déterminé par une valeur de bruit constante ;
- l'étape de prétraitement des échos en relation avec le deuxième sous-mode Doppler définit une première voie de détection et une deuxième voie de détection, la première voie de détection étant mise en œuvre à partir d'une carte de puissance non-masquée et la deuxième voie de détection étant mise en œuvre à partir d'une carte de puissance masquée ;
  ladite étape de prétraitement comprenant en outre une fusion de détections issues des deux voies de détection ;
- lors de la sous-étape d'émission, les impulsions correspondantes sont émises en utilisant des pentes différentes de chirps utilisés pour les émettre ou en ajoutant une phase aléatoire ;
- lors de la sous-étape de réception, des échos associés à des impulsions différentes sont distingués en déterminant les pentes des chirps correspondants ou la phase correspondante ;
- lors de la sous-étape d'émission, les impulsions correspondantes sont émises en utilisant des polarisations différentes ;
- lors de la sous-étape de réception, des échos associés à des impulsions différentes sont distingués en déterminant leurs polarisations ;
- une polarisation est émise pour chaque impulsion ou un ensemble de polarisations formant une signature est émise pour chaque impulsion.

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :

- [Fig. 1] la figure 1 est une vue schématique d'un radar de détection selon l'invention,
- [Fig. 2] la figure 2 est un organigramme d'un procédé de fonctionnement du radar de la figure 1, et

- [Fig. 3] [Fig. 4] [Fig. 5] les figures 3 à 5 sont différentes vues illustrant la mise en œuvre du procédé de la figure 2.

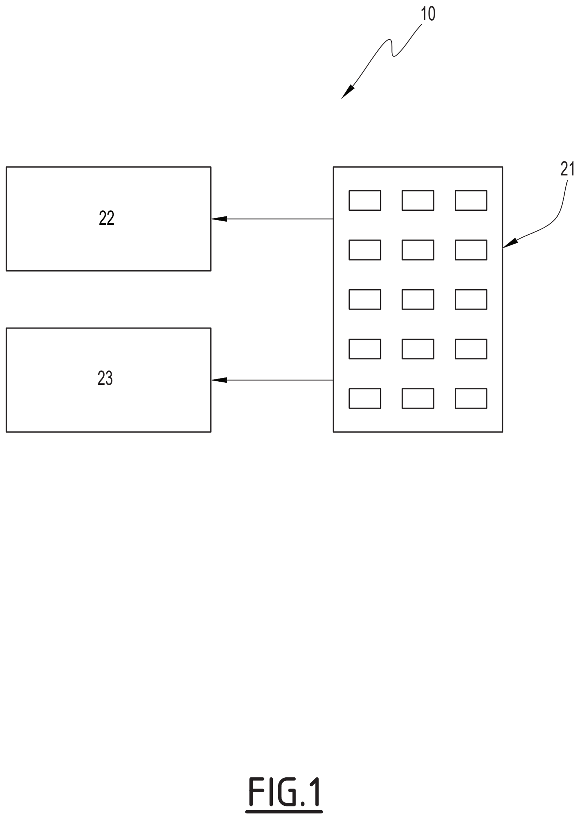

La figure 1 illustre un radar de détection 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 permet de détecter des cibles suivant un mode Doppler par exemple de type MMTI (de l'anglais « Maritime Moving Target Indicator »), GMTI (de l'anglais « Ground Moving Target Indicator ») ou AMTI (de l'anglais « Aerial Moving Targets »).

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

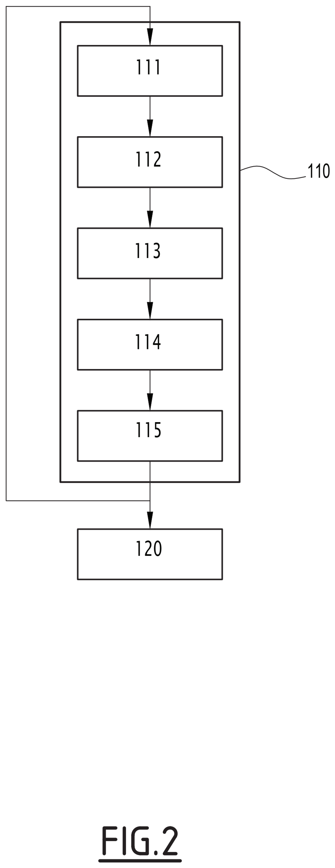

Le procédé de fonctionnement du radar 10 sera désormais expliqué en référence à la figure 2 présentant un organigramme de ses étapes.

Il est considéré que ce procédé est mis en œuvre lors d'un balayage électronique et/ou d'un balayage mécanique (par exemple en azimut et/ou en élévation) de l'espace autour du radar 10, par exemple par la mise en œuvre de formation de faisceaux conventionnelle à l'émission et en réception. En particulier, ce procédé comprend la mise en œuvre itérative au moins de l'étape 110 décrite ci-dessous pour chaque position de pointage du radar 10. Chaque itération de cette étape est appelée récurrence.

Il est considéré en outre que les positions de pointage se succèdent selon un sens de rotation prédéterminé et définissent toutes une ouverture angulaire dépendante de l'angle de dépointage connu de l'homme de l'art. L'ensemble des positions de pointage définissent un cône de visibilité disponible du radar 10. Autrement dit, par « cône de visibilité », on entend l'ensemble des positions de pointage différentes lors d'un tour de balayage effectué par le radar 10. Sans perte de généralité, la séquence de ces positions de pointage peut être également aléatoire pour réaliser un scan complet du cône de visibilité.

Chaque n-ième récurrence de l'étape 110 comprend une émission/réception de signaux dans la position de pointage correspondante.

En particulier, lors de cette étape, l'unité d'émission 22 du radar 10 émet des signaux ayant une forme d'onde particulière et l'unité de réception 23 reçoit des échos de ces signaux.

Les signaux émis/reçus lors de cette étape sont de type dit onde communalisée.

Chaque onde communalisée comprend au moins deux impulsions consécutives associées à des bilans énergétiques différents. Ainsi, chaque impulsion définit un sous-mode Doppler, à savoir un premier sous-mode Doppler et un deuxième sous-mode Doppler, avec un domaine spatial qui lui est associé comme cela sera expliqué par la suite. Les sous-modes Doppler différents emploient le même jeu de formes d'onde et en particulier une même période de répétition et une même largeur de bande émise. De plus, avantageusement, les impulsions sont émises selon des directions d'émission de sorte que les domaines spatiaux associés s'étendent selon des directions différentes.

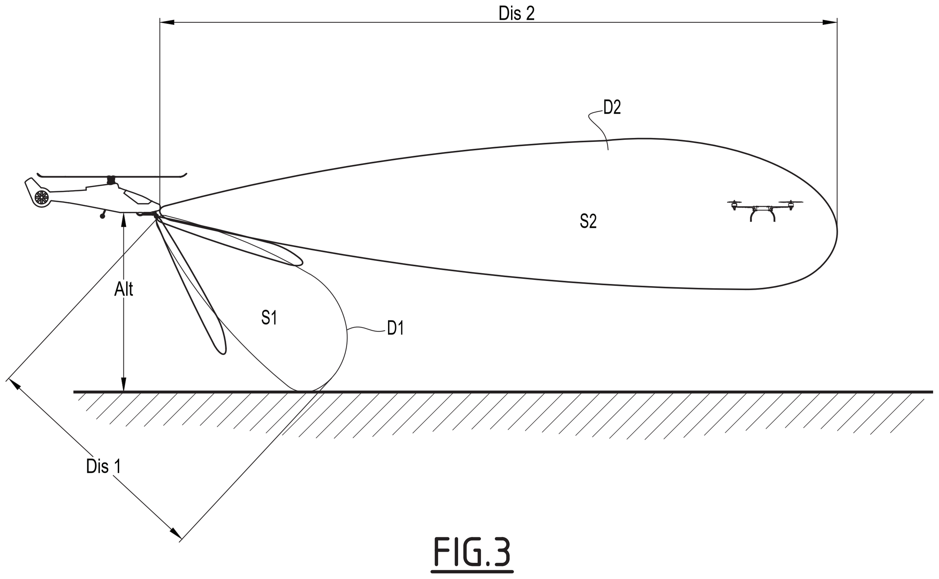

La figure 3 illustre un exemple de mode Doppler par exemple de type AIR décomposé en un premier sous-mode S1 définissant un domaine spatial D1 et un deuxième sous-mode S2 définissant un domaine spatial D2. Le sous-mode S2 est de plus fort bilan énergétique que le sous-mode S1. Par ailleurs, selon le premier sous-mode S1, les impulsions correspondantes sont émises vers le sol/mer. Ainsi, le premier domaine spatial D1 s'étend selon une direction orientée vers le sol/mer. Selon le deuxième sous-mode S2, les impulsions correspondantes sont émises dans la direction de déplacement du porteur. Ainsi, le deuxième domaine spatial D2 s'étend selon cette direction de manière sensiblement parallèle au sol/mer. Les deux domaines D1, D2 définissent des zones de chevauchement, correspondant notamment aux lobes secondaires des antennes lors de l'émission des impulsions correspondantes. En particulier, selon un exemple de réalisation, les lobes secondaires du sous-mode S1 pointent également dans la direction principale du sous-mode S2, et inversement.

De manière générale, chaque domaine spatial peut être défini par une direction d'émission et dans certains cas, par une distance jusqu'au radar 10. La direction d'émission peut par exemple être définie par un couple de valeurs angulaires. Ces valeurs angulaires correspondent par exemple à l'élévation (ou site) et à l'azimut d'émission, dénotées respectivement par El et Az.

Dans l'exemple de la figure 3, le domaine D2 peut être par exemple défini par une distance Dis2 jusqu'au radar 10 et un angle d'élévation égal à 0°. Ce domaine correspond au volume où l'on souhaite détecter une cible aérienne lors du pointage en cours. Dans le même exemple, le domaine D1 correspond au volume d'analyse du fouillis surfacique (sol et/ou mer). Le domaine distance ambigu traité par les deux sous-modes est donné par les caractéristiques de la forme d'onde commune, i.e.

$$\text{Dmin} = c * Te / 2 \text{ et } \text{Dmax} = c * (Tr - Te/2)$$

où :

Te est la durée d'une fenêtre d'émission ;
Tr est la durée d'une fenêtre de réception ;
c est la célérité du son.

De plus, en pratique, Dis2 > Dis1 > Dmax > Dmin.

L'étape 110 d'émission/réception de signaux comprend plusieurs sous-étapes qui seront expliquées en détail ci-dessous.

Lors de la sous-étape 111, l'unité d'émission 22 du radar 10 génère deux impulsions consécutives associées à des sous-modes Doppler différents, c'est-à-dire à des bilans énergétiques différents.

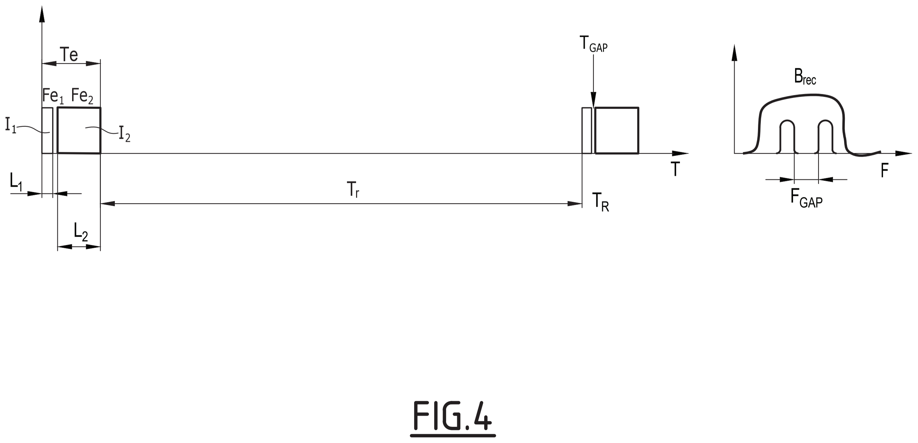

Ainsi, lors de la sous-étape 111, l'unité d'émission 22 génère une première impulsion $I_1$ liée au premier sous-mode Doppler (le sous-mode S1 dans l'exemple de la figure 3) et une deuxième impulsion $I_2$ liée au deuxième sous-mode (le sous-mode S2 dans l'exemple de la figure 3). Ces deux impulsions sont illustrées sur la figure 4.

Les impulsions $I_1$ et $I_2$ sont associées à une même fréquence de répétition, à des directions d'émission différentes et à des fréquences d'émission différentes. La direction d'émission est définie par exemple par un couple de valeurs angulaires telles définies précédemment.

Les impulsions $I_1$ et $I_2$ sont générées dans une fenêtre d'émission Te dans laquelle chaque impulsion a une largeur Li et espacée de l'autre impulsion et de l'une des frontières de la fenêtre d'émission Te par un écart temporel $T_{GAP}$. Cet écart temporel $T_{GAP}$ est choisi le plus petit possible en fonction des capacités de l'émetteur. Dans tout ce qui suit, l'indice i=1 désigne toute valeur relative à la première impulsion et i=2 désigne toute valeur relative à la deuxième impulsion.

Le bilan énergétique de chaque impulsion est défini par sa largeur Li. Ainsi, pour avoir des bilans énergétiques différents, la largeur Li de l'une des impulsions est strictement supérieure à la largeur Li de l'autre. Dans un mode particulier, la largeur Li de l'une des impulsions est au moins deux fois plus grande que celle de l'autre. Ainsi, selon un exemple, 5% de la fenêtre d'émission Te peut être allouée à l'un des sous-modes et 95% de la fenêtre d'émission Te peut être allouée à l'autre sous-mode. Cela représente une différence de bilan énergétique d'environ 13dB. Par exemple, dans le cas d'un rapport 1%/99%, la différence de bilan énergétique est de 20dB.

Dans l'exemple de la figure 4, la largeur $L_2$ de l'impulsion associée au deuxième sous-mode (c'est-à-dire impulsion $I_2$) est strictement supérieure à la largeur $L_1$ de l'impulsion associée au premier sous-mode (c'est-à-dire impulsion $I_1$). Ainsi, dans cet exemple, le deuxième sous-mode présente un bilan énergétique plus important que le premier sous-mode. Inversement, la première impulsion $I_1$ peut avoir une largeur plus grande que la deuxième impulsion $I_2$.

Dans le domaine fréquentiel, les impulsions partagent un même support fréquentiel $B_{rec}$, avec un écart fréquentiel $F_{GAP}$ entre les porteuses Fi correspondantes supérieur aux bandes fréquentielles Bi de ces impulsions. L'écart fréquentiel $F_{GAP}$ est choisi suffisant pour distinguer les échos de ces impulsions à la réception. Dans tout ce qui suit, une bande fréquentielle est définie par une fréquence centrale et une largeur de bande. Avantageusement, dans la suite, toutes les bandes fréquentielles présentent une même largeur. En outre, l'écart fréquentiel $F_{GAP}$ est mesuré entre un couple de fréquences centrales correspondantes et est supérieur à la largeur de chaque bande fréquentielle.

Les bandes fréquentielles $B_1$ et $B_2$ respectivement de la première impulsion $I_1$ et de la deuxième impulsion $I_2$ sont avantageusement choisies les mêmes pour chaque récurrence de l'étape 110. Ainsi, la même fréquence centrale $Fe_1$ et la même fréquence centrale $Fe_2$ sont choisies respectivement pour la première impulsion et pour la deuxième impulsion dans chaque récurrence de l'étape 110, en assurant une cohérence de phases entre les récurrences afin de pouvoir procéder à un traitement Doppler. En outre, avantageusement et de manière alternative, l'impulsion la plus courte peut être réalisée sans modulation linéaire de fréquence (LFM en anglais pour « Linear Frequency Modulation ») de sorte que sa largeur temporelle soit compatible de la résolution distance souhaitée, sans compression d'impulsion (car pas LFM), i.e. $L_1 = 1/B_2$.

Lors de la sous-étape 112, l'unité d'émission 22 émet les impulsions générées lors de la sous-étape précédente dans les bandes fréquentielles correspondantes.

Lors de la sous-étape 113, l'unité de réception 23 reçoit des échos correspondant aux impulsions émises dans une fenêtre temporelle commune de réception. La durée Tr de cette fenêtre commune de réception est égale à la durée totale de la récurrence $T_R$ (c'est-à-dire le temps d'observation du pointage correspondant pour une récurrence, tel que défini précédemment) moins la durée de la fenêtre d'émission Te. Lors de la réception, les échos correspondant aux impulsions différentes sont distingués par les bandes fréquentielles différentes, en utilisant par exemple des filtres passe-bande autour des fréquences centrales.

Lors de la sous-étape 114, l'unité de réception 23 effectue un prétraitement des échos reçus en relation avec le premier sous-mode Doppler.

Ce prétraitement comprend la mise en œuvre d'au moins certaines techniques choisies parmi une technique de compression d'impulsion, une technique de réjection de fouillis et une technique de traitement Doppler. Ces techniques permettent notamment d'établir une carte de puissance des échos en fonction de la vitesse et de la distance jusqu'au radar 10. Autrement dit, une telle carte de puissance est définie par un axe de distance et un axe de vitesse. Il est à noter qu'une mise en œuvre de la technique de rejection de fouilles permet de ne pas saturer les récepteurs sur fouillis proche. Même après réjection, le fouillis reste suffisamment puissant par rapport au niveau plancher de bruit thermique.

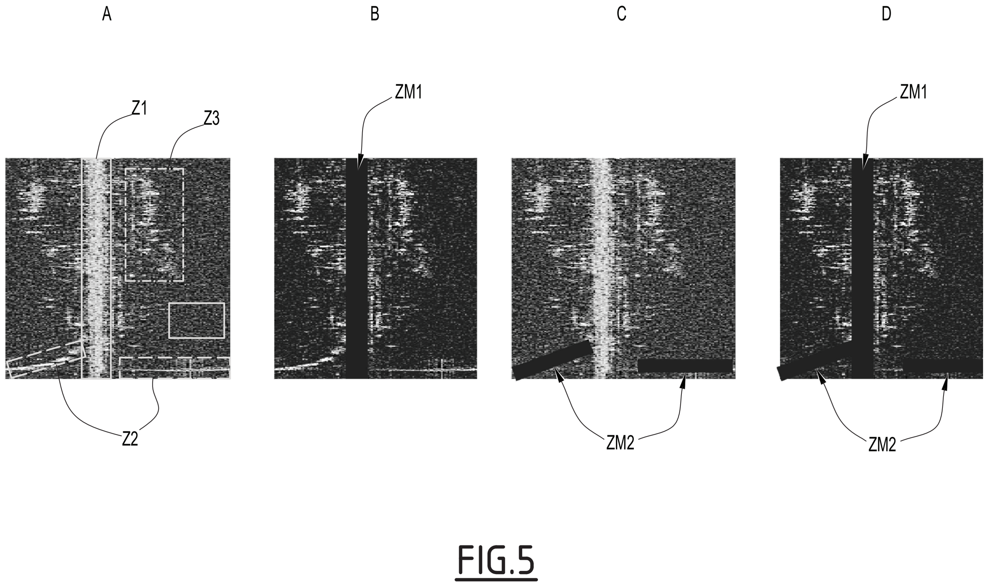

Un exemple d'une telle carte est représenté dans la partie A de la figure 5. Selon cet exemple, la carte de puissance définit une zone de fouillis principal Z1 correspondant au lobe principale des antennes, deux zones de fouillis secondaire Z2 correspondant aux lobes secondaires des antennes et une zone de cible Z3 comprenant des cibles.

Avantageusement, lors de la sous-étape 114, l'unité de réception 23 met en outre en œuvre une technique de suppression d'au moins des zones de fouillis secondaire Z2. Cette technique peut comprendre notamment un seuillage.

Pour cela, la technique de suppression consiste à identifier d'abord le fond de la carte de puissance correspondant à la puissance moyenne de bruit thermique Pbth. Puis, en connaissant la géométrie, le bilan d'énergie et une SER type de fouillis de sol (ou une réflectivité), la technique peut en déduire un rapport fouillis à bruit (RFB) qui correspond à la puissance fouillis d'une cellule de résolution divisée par Pbth. Le fouillis doit être exclu quand le RFB est au moins supérieur au seuil de détection, soit classe 10 à 15dB (sans post-intégration). La technique applique ensuite un seuil sur la carte de puissance du premier sous-mode égal par exemple au seuil du deuxième sous-mode plus une marge de détection plus une autre marge (3-5dB voire plus) pour accrocher les zones de fouillis. Les cibles utiles ne bénéficieront pas du gain d'antenne et ne ressortent donc pas sur le premier sous-mode. Cela va permettre de récupérer les zones de fouillis secondaires (celles qui sont visées par l'antenne du premier sous-mode) mais également dans certains cas le fouillis principal (qui sera vu par les lobes secondaires du premier sous-mode d'analyse).

Chaque zone de fouillis secondaire Z2 déterminée peut ensuite être remplacée par une valeur constante correspondant par exemple à un niveau moyen de bruit thermique, comme cela est illustré dans la partie C de la figure 5 où les zones ZM2 remplacent les zones Z2 de fouillis secondaire.

Selon certains modes de réalisation, lors de la sous-étape 114, l'unité de réception 23 met en outre en œuvre une technique de suppression de la zone de fouillis principal. Pour ce faire, un seuillage peut également être appliqué. En particulier, le seuillage peut être effectué à partir du niveau moyen de bruit thermique (suffisamment fort) pour déterminer la position vitesse et la largeur de la zone de fouillis principal Z1. Ensuite, comme dans le cas précédent, la zone de fouillis principal peut être est remplacée par un niveau moyen de bruit thermique. Cela est illustré dans la partie B de la figure 5 où la zone ZM1 remplace la zone Z1 de fouillis principal.

Enfin, toutes les zones de fouillis (principal et secondaire) peuvent être remplacées par un niveau moyen de bruit thermique comme cela est illustré dans la partie D de la figure 5.

Lors de la sous-étape 115, l'unité de réception 23 effectue un prétraitement des échos reçus en relation avec le deuxième sous-mode Doppler. Cette sous-étape peut être mise en œuvre au moins partiellement en parallèle avec la sous-étape 114.

Comme dans le cas précédent, ce prétraitement comprend la mise en œuvre d'au moins certaines techniques choisies parmi une technique de compression d'impulsion, une technique de réjection de fouillis et une technique de traitement Doppler. Également comme dans le cas précédent, ces techniques permettent notamment d'établir une carte de puissance des échos en fonction de la vitesse et de la distance jusqu'au radar 10, en relation avec le deuxième sous-mode Doppler.

En outre, lors de cette sous-étape 115, l'unité de réception 23 met en œuvre une technique de mesure de bruit ambiant et une technique de détection par exemple de type TFAC (« taux de fausse alarme constant »).

En outre, avantageusement lors de cette sous-étape 115, l'unité de réception 23 met en œuvre une technique de masquage de chaque zone de fouillis déterminée lors de la sous-étape 114 sur la carte de puissance déterminée en relation avec le deuxième sous-mode Doppler.

Cette technique de masquage est avantageusement mise en œuvre avant la technique de détection (par exemple lors de la mise en œuvre de la technique de rejection de fouillis) et comprend le masquage sur la carte de puissance déterminée en relation avec le deuxième sous-mode Doppler de chaque zone de fouillis déterminée en relation avec le premier sous-mode Doppler. À cet effet, chaque zone de fouillis déterminée lors de la sous-étape 114 peut se présenter sous la forme d'un masque défini par une valeur de bruit constante. Ce masque peut alors être appliqué à la carte de puissance déterminée en relation avec le deuxième sous-mode Doppler. Cette carte de puissance est appelée par la suite carte de puissance masquée. La technique de détection est alors mise en œuvre sur cette carte de puissance masquée.

Selon un autre exemple de réalisation, la technique de détection est mise en œuvre selon deux voies de détection. Dans un tel cas, une première voie de détection peut être mise en œuvre sur une carte de puissance non-masquée (c'est-à-dire une carte de puissance telle que déterminée initialement) et une deuxième voie de détection peut être mise en œuvre sur la carte de puissance masquée. Ensuite, un résultat d'une telle détection peut comprendre une fusion de résultats issus des deux voies.

Selon les deux exemples, la technique de détection permet notamment de pré-détecter des cibles qui doivent être confirmées lors d'un traitement d'extraction qui sera expliqué en détail par la suite. Ainsi, cette technique permet de générer une liste de pré-détections, c'est-à-dire une liste de cibles pré-détectées, en analysant la carte de puissance masquée ou les deux cartes, à savoir la carte masquée et la carte non-masquée.

Lors d'une étape 120 suivante, l'unité de réception 23 effectue un traitement d'extraction à partir de la liste de pré-détections déterminée lors de l'étape 110.

En particulier, et ce de manière connue en soi, un tel traitement d'extraction met à profit les informations glanées par l'emploi de plusieurs périodes de répétition (ou fréquence de répétition Fr) jouées au sein d'un même pointage afin de lever les ambiguïtés distance, vitesse, en corrélant les différentes pré-détections obtenues sur chaque Fr. Tout autre traitement permettant d'identifier des cibles dans un mode de veille peut être employé, par exemple et sans limitation un traitement d'extraction complémentaire, de type « tour à tour », pour renforcer la maitrise du taux de fausse alarme en amont de l'algorithme de pistage.

Une cible est considérée comme détectée lorsqu'à l'issue de ce traitement d'extraction (aussi appelé lever d'ambiguïté), l'unité de réception 23 conclut qu'une telle cible est présente dans la zone considérée.

Une cible est considérée comme définitivement détectée lorsqu'après plusieurs mises en œuvre des étapes 110 et 120, au moins K détections sont présentes et corrèlent dans une même zone sur un horizon de N mises en œuvre de ces étapes. Dans cette notation, le nombre K signifie le nombre d'étapes 120 lors desquelles la cible était considérée comme détectée. Le coefficient K/N peut être alors comparé avec un seuil qui est appelé seuil d'extraction des cibles.

À l'issue de cette étape 120, l'unité de réception 23 génère une liste de détections, c'est-à-dire une liste de cibles détectées.

Puis, en fonction de différents modes de réalisation de l'invention, le pistage d'au moins certaines des cibles peut être effectué.

On conçoit alors que le procédé selon l'invention présente un certain nombre d'avantages.

En particulier, la décomposition du mode de détection en au moins deux sous-modes orientés selon des directions différentes, permet de masquer les zones de fouillis, notamment les zones de fouillis secondaire, en amont de la détection. Cela permet au détecteur, quelle que soit la topologie choisie, de détecter des cibles au plus proche de ces zones de fouillis, sans désensibilisation (prise en compte d'échantillons de fouillis dans la puissance de bruit ambiant) ni fausses alarmes issues du fouillis principal. Cela rend alors le procédé particulièrement efficace, adaptatif à toute géométrie et combinaison de fouillis surfacique, et peu exigeant et prédictible en termes de capacité de calcul.

Dans certains modes de réalisation, le procédé de fonctionnement tel qu'expliqué précédemment comprend en outre la mise en œuvre d'au moins une technique permettant de séparer, lors de l'émission/réception des ondes communalisées, les échos des impulsions correspondant à des sous-modes différents pour reconstituer une image complète de l'environnement. Ces techniques sont par exemple utilisables lorsqu'une même fréquence d'émission est utilisée pour les deux impulsions.

Selon une première technique, lors de la mise en œuvre de la n-ième récurrence de l'étape 110 et notamment lors de la sous-étape de l'émission 112, l'unité d'émission 22 choisit l'une des impulsions, par exemple la première impulsion et ajoute une phase aléatoire $\phi_{in}$ à cette impulsion. Avantageusement, l'unité d'émission 22 ajoute une phase aléatoire différente $\phi_{in}$ à chacune des impulsions. La ou chaque impulsion ayant une phase aléatoire $\phi_{in}$ ajoutée est dite par la suite impulsion déphasée.

Il est à noter que le choix de l'impulsion à déphaser peut rester le même pour chaque récurrence de cette sous-étape 112. Autrement dit, lorsqu'une seule impulsion est déphasée lors de cette sous-étape, la même impulsion est déphasée dans chaque récurrence de cette étape. Lorsque les deux impulsions sont déphasées lors de cette sous-étape, ces impulsions sont également déphasées dans chaque récurrence de cette sous-étape.

Puis, lors de la sous-étape de réception 113, l'unité de réception 23 compense le déphasage des échos reçus dans la bande fréquentielle de la ou de chaque impulsion déphasée, par la phase aléatoire correspondante. Autrement dit, le déphasage s'effectue en faisant une soustraction de la valeur $\phi_{in}$ dans la bande correspondant à l'indice i.

Ainsi, lors du traitement qui suit, seulement les échos correspondant au sous-mode correspondant peuvent être traités de manière cohérente. Le déphasage des autres échos ne peut pas se faire correctement de sorte qu'ils sont considérés comme des bruits blancs. Cette technique requiert par ailleurs de traiter en parallèle les rangs d'ambigüité distance et d'avoir un nombre de récurrences suffisant pour assurer l'isolation nécessaire.

D'autres techniques pour obtenir une meilleure isolation des échos correspondant à des différents sous-modes lors de leur réception sont également possibles. Les techniques expliquées ci-dessous permet notamment d'effectuer un seul traitement Doppler contrairement à la technique précédemment citée de phase aléatoire.

Ainsi, selon une deuxième technique, lors de la mise en œuvre de la n-ième récurrence de l'étape 110 et notamment lors de la sous-étape de l'émission 112, l'unité d'émission 22 met en œuvre des pentes différentes des chirps utilisés pour émettre les impulsions associées aux sous-modes différents. Autrement dit, lors de cette sous-étape 112, l'unité d'émission 22 émet les impulsions en utilisant soit une pente ascendante soit une pente descendante en fonction du sous-mode associé à chaque impulsion. La même pente est alors utilisée pour toutes les impulsions de ce type dans toutes les récurrences de l'étape 110.

Par exemple, pour toutes les récurrences, une pente ascendante est choisie pour les impulsions associées à un sous-mode particulier et une pente descendante est choisie pour les impulsions associées à un autre sous-mode particulier.

Puis, lors de la sous-étape de réception 113, l'unité de réception 23 reçoit des échos ayant des pentes fréquentielles différentes. Cette unité de réception 23 détermine donc les pentes reçues (en utilisant notamment des filtres adaptés) afin d'isoler les échos correspondant aux sous-modes différents.

Selon une troisième technique permettant d'obtenir également une meilleure isolation des échos correspondant aux sous-modes différents lors de leur réception, lors de la mise en œuvre de la n-ième récurrence de l'étape 110 et notamment lors de la sous-étape de l'émission 112, l'unité d'émission 22 met en œuvre des polarisations différentes des ondes utilisées pour émettre les impulsions associées aux sous-modes différents. Autrement dit, lors de cette sous-étape 112, l'unité d'émission 22 émet l'onde portant chaque impulsion avec une polarisation choisie en fonction du sous-mode associé à cette impulsion. Cette même polarisation est choisie pour ce type d'impulsion pour toutes les récurrences de l'étape 110.

Par exemple, deux polarisations, à savoir une polarisation verticale et une polarisation horizontale peuvent être choisies pour les impulsions émises lors de la sous-étape 112. Selon d'autres exemples, une polarisation à 45° ou en circulaire peut être utilisée.

Puis, lors de la sous-étape de réception 113, l'unité de réception 23 reçoit des échos ayant des polarisations différentes. Cette unité de réception 23 détermine donc les polarisations des échos reçus (en utilisant notamment des filtres adaptés) afin d'isoler les échos correspondant aux sous-modes différents.

Le principe qui vient d'être décrit peut être raffiné en utilisant plusieurs polarisations dans la même impulsion.

Dans un tel cas, chaque impulsion comporte une signature de polarisation spécifique. Une telle signature correspond à un code de polarisation.

Cette technique permet ainsi de colorer les différentes impulsions dans l'espace et d'obtenir une réjection supplémentaire de 20 à 30 dB.

Dans certains modes de réalisation, les techniques précitées sont combinées entre elles pour être mises en œuvre simultanément. En outre, le traitement d'extraction tel qu'expliqué précédemment pour lever les ambiguïtés en distance et vitesse et/ou selon au moins une direction de pointage, peut être également utilisé en combinaison avec la deuxième technique ou la troisième technique, telle que décrite ci-dessus.

## Revendications

1. Procédé de fonctionnement d'un radar (10) de détection de cibles suivant un mode Doppler, le procédé comprenant la mise en œuvre de plusieurs récurrences d'une étape (110) d'émission/réception de signaux, chaque n-ième récurrence de ladite étape (110) comprenant les sous-étapes suivantes :

   + génération (111) de deux impulsions consécutives associées à un premier sous-mode Doppler et à un deuxième sous-mode Doppler, lesdits sous-modes Doppler définissant des bilans énergétiques différents ;
   + émission (112) des impulsions dans des bandes fréquentielles différentes selon des directions d'émission différentes ;
   + réception (113) dans une fenêtre temporelle commune des échos des impulsions ;
   + prétraitement (114) des échos reçus en relation avec le premier sous-mode Doppler pour déterminer au moins une zone de fouillis ;
   + prétraitement (115) des échos reçus en relation avec le deuxième sous-mode Doppler en dehors de la ou de chaque zone de fouillis déterminée en relation avec le premier sous-mode Doppler ;

   le procédé comprenant en outre l'étape suivante :

   - mise en œuvre (120) d'un traitement d'extraction à partir d'un résultat de prétraitement des échos reçus en relation avec le deuxième sous-mode Doppler.

2. Procédé selon la revendication 1, dans lequel le deuxième sous-mode Doppler définit un bilan énergétique plus important que le premier sous-mode Doppler.

3. Procédé selon la revendication 2, dans lequel l'impulsion associée au deuxième sous-mode Doppler a une largeur plus importante que l'impulsion associée au premier sous-mode Doppler.

4. Procédé selon l'une quelconque des revendications précédentes, dans lequel :

   - le radar de détection est embarqué dans un aéronef ;
   - la direction d'émission de l'impulsion associée au premier sous-mode Doppler correspond à la direction sol/mer.

**5.** Procédé selon l'une quelconque des revendications précédentes, dans lequel l'étape de prétraitement (114) des échos reçus en relation avec le premier sous-mode Doppler comprend la détermination d'au moins une zone de fouillis principal et/ou d'au moins une zone de fouillis secondaire.

**6.** Procédé selon l'une quelconque des revendications précédentes, dans lequel chacune des sous-étapes de prétraitement (114, 115) des échos reçus comprend la détermination d'une carte de puissance des échos, définissant un axe de distance et un axe de vitesse.

**7.** Procédé selon la revendication 6, dans lequel la ou chaque zone de fouillis est déterminée par un seuillage de la carte de puissance déterminée en relation avec le premier sous-mode Doppler.

**8.** Procédé selon la revendication 6 ou 7, dans lequel la ou chaque zone de fouillis déterminée en relation avec le premier sous-mode Doppler est transférée sous la forme d'un masque sur la carte de puissance déterminée en relation avec le deuxième sous-mode Doppler.

**9.** Procédé selon la revendication 8, dans lequel le masque est déterminé par une valeur de bruit constante.

**10.** Procédé selon la revendication 8 ou 9, dans lequel l'étape de prétraitement (115) des échos en relation avec le deuxième sous-mode Doppler définit une première voie de détection et une deuxième voie de détection, la première voie de détection étant mise en œuvre à partir d'une carte de puissance non-masquée et la deuxième voie de détection étant mise en œuvre à partir d'une carte de puissance masquée ;

ladite étape de prétraitement (115) comprenant en outre une fusion de détections issues des deux voies de détection.

**11.** Procédé selon l'une quelconque des revendications précédentes, dans lequel :

- lors de la sous-étape d'émission (112), les impulsions correspondantes sont émises en utilisant des pentes différentes de chirps utilisés pour les émettre ou en ajoutant une phase aléatoire ;
- lors de la sous-étape de réception (113), des échos associés à des impulsions différentes sont distingués en déterminant les pentes des chirps correspondants ou la phase correspondante.

**12.** Procédé selon l'une quelconque des revendications précédentes, dans lequel :

- lors de la sous-étape d'émission (112), les impulsions correspondantes sont émises en utilisant des polarisations différentes ;
- lors de la sous-étape de réception (113), des échos associés à des impulsions différentes sont distingués en déterminant leurs polarisations.

**13.** Procédé selon la revendication 12, dans lequel une polarisation est émise pour chaque impulsion ou un ensemble de polarisations formant une signature est émise pour chaque impulsion.

**14.** Radar (10) de détection de cibles comprenant des moyens techniques (21, 22, 23) configurés pour mettre en œuvre le procédé selon l'une quelconque des revendications précédentes.

FIG.1

## FIG.2

FIG.3

FIG.4

FIG.5

Europäisches Patentamt

European Patent Office

Office européen des brevets

**RAPPORT DE RECHERCHE EUROPEENNE**

Numéro de la demande

EP 25 22 2088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HE XIONGPENG ET AL: "Ground Moving Target Detection With Nonuniform Subpulse Coding in SAR System", IEEE TRANSACTIONS ON GEOSCIENCE AND REMOTE SENSING, IEEE, USA, vol. 61, 23 décembre 2022 (2022-12-23), pages 1-18, XP011931787, ISSN: 0196-2892, DOI: 10.1109/TGRS.2022.3231914 [extrait le 2022-12-23] | 1-7,14 | INV. G01S7/292 G01S7/41 G01S13/52 G01S13/524 |
| A | * pages 3,6,14; figures 3,4,15,18 * ----- | 8-13 | |
| A | US 11 835 648 B2 (ROCKWELL COLLINS INC [US]) 5 décembre 2023 (2023-12-05) * le document en entier * ----- | 1-14 | |
| A | US 2013/257645 A1 (PENNEY RICHARD W [GB]) 3 octobre 2013 (2013-10-03) * le document en entier * ----- | 1-14 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 16 avril 2026 | Kern, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2026

| Document brevet cité au rapport de recherche | | Date de publication | Membre(s) de la famille de brevet(s) | | Date de publication |
|---|---|---|---|---|---|
| US 11835648 | B2 | 05-12-2023 | EP | 4063894 A1 | 28-09-2022 |
| | | | US | 2022308164 A1 | 29-09-2022 |
| US 2013257645 | A1 | 03-10-2013 | DE | 102004003304 B3 | 27-03-2014 |
| | | | GB | 2521097 A | 17-06-2015 |
| | | | US | 2013257645 A1 | 03-10-2013 |

EPO FORM P0460

Pour tout renseignement concernant cette annexe : voir Journal Officiel de l'Office européen des brevets, No.12/82